# EUROPEAN PATENT APPLICATION

(11) **EP 4 799 775 A1**
(43) Date of publication of application: **02.09.2026**
(21) Application number: 24915640.7
(22) Date of filing: 05.01.2024
(51) Int. Cl.: B25J 13/00, B25J 9/22

(54) **ROBOT MOTION GENERATION ASSISTANCE DEVICE, ROBOT MOTION GENERATION ASSISTANCE SYSTEM, AND ROBOT MOTION GENERATION ASSISTANCE PROGRAM**

(71) Applicant: Riverfield Inc., Tokyo 107-0052 (JP)
(72) Inventor: KANNO, Takahiro, Tokyo 107-0052 (JP)
(74) Representative: Adares PartGmbB
(86) International application number: PCT/JP2024/000051
(87) International publication number: WO 2025/146716

(57) **Abstract**

A robot action generation assistance device for a robot that performs an action on an object, includes: storage means for storing an API document for controlling the robot and information in an object database; text data acquisition means for acquiring text data that is described by a user in a natural language about details of a resultant to be obtained by the action of the robot on the object; synthetic text data generation means for generating synthetic text data by adding the API document for controlling the robot and the information in the object database to the text data acquired by the text data acquisition means; source code acquisition means for inputting the synthetic text data generated by the synthetic text data means into a natural language processor, and acquiring, from the natural language processor, output of source code for the action of the robot to obtain the resultant; simulation means for performing simulation in which the robot is caused to act in a virtual environment by using the source code acquired by the source code acquisition means; transmission means for transmitting the source code to the robot when the resultant is obtained in the simulation; and source code correction means for, when the resultant is not obtained in the simulation, correcting the source code by re-inputting information needed to correct the source code into the natural language processor, based on abnormality information including an error message detected during the simulation.

## Description

### Technical Field

The present disclosure relates to a robot action generation assistance device, a robot action generation assistance system, and a robot action generation assistance program.

### Background Art

It has been well known that industrial robots are used in various types of manufacture, assembly, and the like. Generally, robots pick, move, and place objects in various shapes. Conventionally, a user (operator) uses a teaching operation panel (teach pendant) to teach a robot how to pick, move, and place an object. Robot teaching by the use of such a teach pendant is time consuming and also requires the teaching user to have professional programming skills.

Accordingly, Non Patent Literature 1 discloses a technology in which trajectory data for a robot is generated through natural language processing, without using a teach pendant. The natural language processing disclosed in Non Patent Literature 1 can generate a robot action program to achieve a simple action sequence, such as moving an object, opening and closing a door, or the like.

### Citation List

### Non Patent Literature

Non Patent Literature 1: Naoki Wake, Atsushi Kanehira, Kazuhiro Sasabuchi, Jun Takamatsu, and Katsushi Ikeuchi, "ChatGPT Empowered Long-Step Robot Control in Various Environments: A Case Application", 2023, https://www.microsoft.com/en-us/research/uploads/prod/2023/04/chatgpt_robot_manipulati on_prompts.pdf

### Summary of Invention

### Technical Problem

However, in conventional technologies, advanced expertise is required of a user when robot actions that achieve a complicated action sequence are to be generated. Moreover, for the natural language processing disclosed in Non Patent Literature 1, it is difficult to accurately generate a complicated action program including conditional branching, iterative processing, and the like.

Accordingly, an objective of the present disclosure is to provide a robot action generation assistance device, a robot action generation assistance system, and a robot action generation assistance program that make it possible to generate robot actions that carry out complicated work, without requiring expertise.

### Solution to Problem

A robot action generation device according to an aspect of the present disclosure is a robot action generation assistance device for a robot that performs an action on an object, including: storage means for storing an API document for controlling the robot and information in an object database; text data acquisition means for acquiring text data that is described by a user in a natural language about details of a resultant to be obtained by the action of the robot on the object; synthetic text data generation means for generating synthetic text data by adding the API document for controlling the robot and the information in the object database to the text data acquired by the text data acquisition means; source code acquisition means for inputting the synthetic text data generated by the synthetic text data means into a natural language processor, and acquiring, from the natural language processor, output of source code for the action of the robot to obtain the resultant; simulation means for performing simulation in which the robot is caused to act in a virtual environment by using the source code acquired by the source code acquisition means; transmission means for transmitting the source code to the robot when the resultant is obtained in the simulation; and source code correction means for, when the resultant is not obtained in the simulation, correcting the source code by re-inputting information needed to correct the source code into the natural language processor, based on abnormality information including an error message detected during the simulation.

### Advantageous Effect of Invention

The present disclosure can provide a robot action generation assistance device, a robot action generation assistance system, and a robot action generation assistance program that make it possible to generate robot actions that carry out complicated work, without requiring expertise.

### Brief Description of Drawings

[Figure 1] Figure 1 shows an example of the entire configuration of a robot action generation assistance system according to an embodiment.
[Figure 2] Figure 2 shows an example of a configuration of a robot action generation assistance server according to the embodiment.
[Figure 3] Figure 3 shows an example of display of an input screen on a terminal device according to the embodiment.
[Figure 4] Figure 4 shows an example of synthetic text data according to the embodiment.
[Figure 5] Figure 5 shows an example of an operation sequence of the robot action generation assistance system according to the embodiment.

### Description of Embodiment

Hereinafter, an embodiment of the present disclosure is described in detail. Note that the present disclosure is not limited to the given illustrations, is defined by claims, and is intended to include equivalent meanings to claims and all changes made within the scope thereof.

Note that in the description and the drawings relating to each embodiment, constituent elements that have substantially the same or corresponding functional configurations are denoted by the same reference signs, and duplicated description thereof is thus omitted in some cases. To facilitate understanding, the scale of each part in the drawings is different from the actual one in some cases.

### <<Embodiment>>

### <Entire configuration of robot action generation assistance system 1>

First, the entire configuration of a robot action generation assistance system 1 is described.

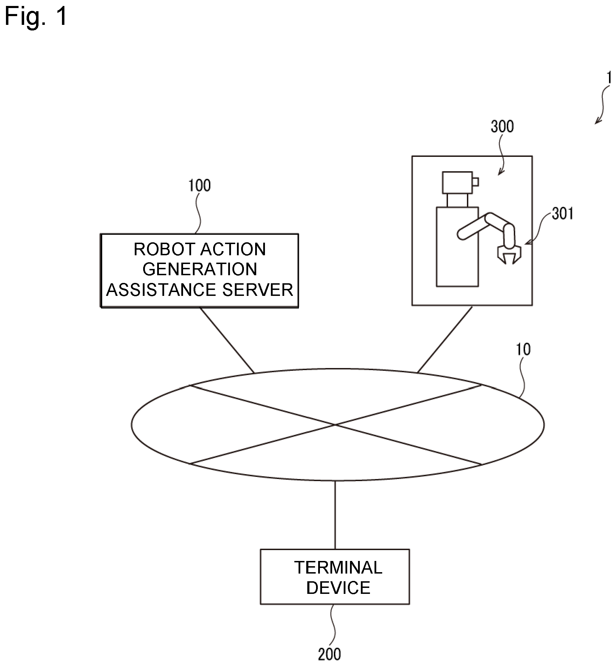

Figure 1 is a diagram showing an example of the entire configuration of the robot action generation assistance system 1 according to the present embodiment. As shown in Figure 1, the robot action generation assistance system 1 includes a robot action generation assistance server 100, a terminal device 200, and a robot 300.

The robot action generation assistance server 100, the terminal device 200, and the robot 300 are connected to a network 10 and can communicate with each other through the network 10. The network 10 includes the Internet. The network 10 may include a LAN (Local Area Network) and/or a WAN (Wide Area Network). The robot action generation assistance server 100, the terminal device 200, and the robot 300 may be directly connected through wired communication or wireless communication. The robot action generation assistance server 100 may be, for example, a general-purpose computer, such as a workstation or a PC, or may be logically implemented by using cloud computing (distributed computing). In other words, the robot action generation assistance server 100 may be configured by using a single computer or a plurality of computers.

The robot action generation assistance server 100 is an example of a robot action generation assistance device that assists a user in generating an action program (source code) for the robot 300 that carries out complicated work. Note that source code is a character string described by using a programming language, such as Python. In the present embodiment, source code is assumed to be in the Python format but is not limited to such a format. For example, a programming language, such as C, C++, C#, Java, Visual Basic, Perl, or JavaScript, may be used.

Here, a description is given of an example of a scenario in which the present disclosure is applied.

An example of a scenario in which the present disclosure is applied is a scenario in which a user of the robot 300 installed in a manufacturing site for food, such as hospital meals or boxed meals, generates an action program (source code) for the robot 300. The robot 300 installed in the manufacturing site for food, such as hospital meals or boxed meals, repeats the actions of identifying (selecting) an ingredient from among a plurality of prepared foods and the like, moving the identified ingredient to a predetermined place in a container, and releasing the ingredient. Since such work by the robot 300 includes an action that varies according to conditions, a repeated action, and the like, a complicated action program (source code) is needed. Note that scenarios in which the present disclosure is applied are not limited to the manufacturing site for food, such as hospital meals or boxed meals. For example, the present disclosure is also applicable to assistance in generating an action program (source code) for the robot 300 that carries out complicated work, such as manufacture, assembly, or the like of parts and components.

In the present embodiment, the robot action generation assistance server 100 assists a user who generates source code for the robot 300 that performs actions on an object, in generating the actions of the robot 300. For example, the robot action generation assistance server 100 displays, on the terminal device 200 of the user, an input screen 131a that prompts input of details of a resultant to be obtained by the actions of the robot 300 on objects, generates source code for the actions of the robot 300 according to the inputted details of the resultant, and transmits the generated source code to the robot 300.

The robot action generation assistance server 100 stores an API document 122 for controlling the robot 300 and information in an object database 121, acquires text data that is described by the user in a natural language about the details of the resultant to be obtained by the actions of the robot 300 on the objects, generates synthetic text data by adding, to the acquired text data, the API document 122 for controlling the robot 300 and the information in the object database 121, inputs the generated synthetic text data into a natural language processing section 135, acquires, from the natural language processing section 135, output of the source code for the actions of the robot 300 to obtain the resultant, and causes the robot 300 to act in a virtual environment by using the acquired source code. When the resultant is obtained in the simulation, the robot action generation assistance server 100 transmits the source code to the robot 300, and, when the resultant is not obtained in the simulation, corrects the source code by re-inputting information needed to correct the source code into the natural language processing section 135, based on abnormality information including an error message detected during the simulation.

Note that the robot 300 has a robot hand 301. Each object is, for example, an ingredient, such as a prepared food. The API document 122 includes, for example, information relating to picking with the robot hand 301, moving of the robot hand 301, releasing from the robot hand 301, and layout information on movement-destination places. The resultant is, for example, a fried chicken boxed meal, and the details thereof are a boxed meal including six pieces of fried chicken, white rice, and potato salad.

As described above, when the user describes the details of the resultant to be obtained by the actions of the robot 300 on the objects in the natural language, the source code for the actions of the robot 300 according to the described details of the resultant is automatically generated, and the source code is transmitted to the robot 300. Accordingly, even a user with poor programming skills can generate source code for the robot 300 that carries out complicated work including an action that varies according to conditions, a repeated action, and the like.

Moreover, in the manufacturing site for food, such as hospital meals or boxed meals, since the details of served foods (types, quantities, and the like of ingredients) in the boxed meals or the like range widely according to the health states of patients or orders from users, a plurality of pieces of source code for actions of the robot 300 need to be generated. However, in the present embodiment, since source code for actions of the robot 300 can be automatically generated, a plurality of pieces of source codes can be easily generated.

Note that the natural language is a language that naturally emerged in the history of humankind, and is, for example, Japanese, English, or the like. Although the natural language is assumed to be Japanese in the present embodiment, the natural language is not limited to Japanese and may be any other kind of natural language (for example, English).

The robot action generation assistance server 100 is a server that executes a natural language processing task using a large-scale language model (LLM: Large Language Model) built with machine learning technology including artificial intelligence (AI). The LLM is a language model that learned large-scale text data in large amounts beforehand and that can execute various language processing tasks simply by being given only a few exemplary tasks. Examples of such LLM include GPT-3 and GPT-4 developed by OpenAI, and the like.

In the present embodiment, the robot action generation assistance server 100 automatically generates source code from natural language by using the LLM that learned a vast amount of source code beforehand. For example, the LLM has learned a vast amount of source code publicly available on the Internet. For example, since source code generally includes a natural language sentence, such as a comment, the correspondences between natural language sentences and programs have been learned. Accordingly, when a natural language sentence (text data) described by the user is acquired, the robot action generation assistance server 100 can automatically generate source code and transmit the source code to the robot 300.

Moreover, in addition to the details of the resultant obtained by the actions of the robot 300 on the objects, which are acquired from the user, the robot action generation assistance server 100 inputs the API document 122 for controlling the robot 300 and the information in the object database 121 into the LLM, and thereby can generate source code in which picking, moving, and releasing of each object by the robot hand 301 are combined.

The terminal device 200 is, for example, a personal computer (PC), a smartphone, a tablet terminal, a wearable terminal, or the like. The terminal device 200 includes an interface with the user and an interface with the network 10. The interface with the user includes at least one of, for example, a display, a keyboard, a mouse, a touch pad, a touch panel display, a microphone, and a speaker. The interface with the network 10 includes at least one of a wired communication interface and a wireless communication interface. The terminal device 200 accesses the robot action generation assistance server 100 via the network 10 and exchanges information with the robot action generation assistance server 100 to generate source code for actions of the robot 300.

The robot 300 includes, for example, the robot hand 301 that picks an object, an image capture unit 302 that captures objects, and a control unit 303 that controls the robot hand 301 and the image capture unit 302. For example, the robot 300 can manufacture a resultant (fried chicken boxed meal) by repeating a series of actions of identifying (selecting) an object (ingredient) to be picked through image recognition of image data captured by the image capture unit 302, picking the identified object (ingredient), moving the picked object (ingredient) to a predetermined place (into a container, such as dishware or a meal box), releasing the object (ingredient) at the predetermined place (in the container), and the like.

The robot 300 stores, for example, a trained model that identifies the name of an ingredient included in the image data, and performs image recognition processing by using the trained model. In other words, the robot 300 inputs, into the trained model, image data in which a plurality of ingredients is captured, thereby identifies the names of the ingredients included in the image data, and acquires the positions of the identified ingredients.

### <Robot action generation assistance server 100>

Next, a configuration of the robot action generation assistance server 100 is described.

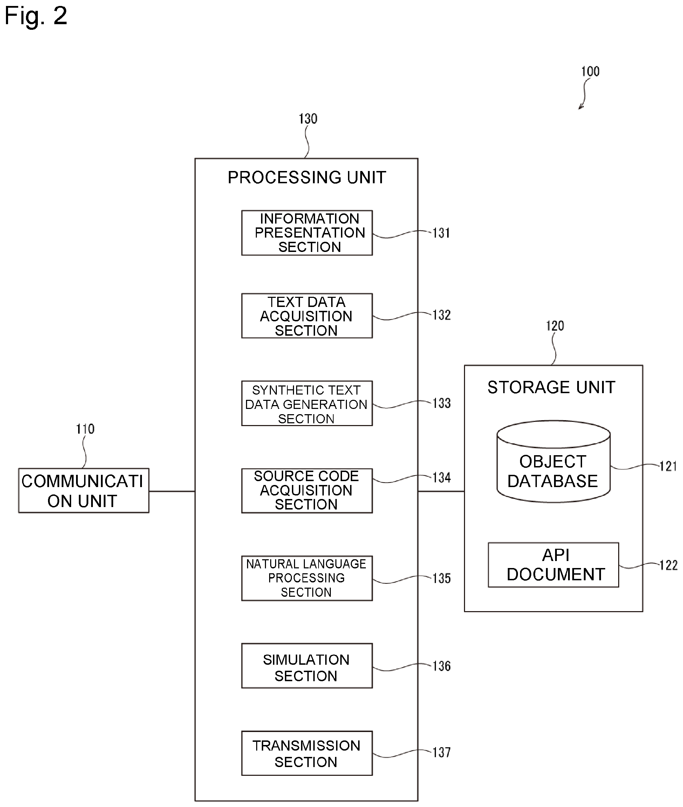

Figure 2 is a diagram showing an example of the configuration of the robot action generation assistance server 100 according to the present embodiment. As shown in Figure 2, the robot action generation assistance server 100 includes a communication unit 110, a storage unit 120, and a processing unit 130. The communication unit 110, the storage unit 120, and the processing unit 130 are connected to each other through an undepicted bus or the like.

The communication unit 110, under control of the processing unit 130, communicates with other devices (for example, the terminal device 200 and the robot 300) via the network 10. The communication by the communication unit 110 may be wired communication, or may include wireless communication.

The storage unit 120 stores the API document 122 for controlling the robot 300 and the information in the object database 121. The API document 122 is also an API specification, and includes information for executing functions of picking, moving, releasing, and the like by the robot hand 301. Since source code generated by the robot action generation assistance server 100 uses the API document 122, the functions of picking, moving, releasing, and the like by the robot hand 301 can be executed via an API. The object (ingredient) database 121 is to record information relating to the name of an object (ingredient) learned by the trained model stored in the robot 300. The names of objects (ingredients) recorded in the object (ingredient) database 121 are similar to the names of the learned ingredients stored in the robot 300.

For example, the storage unit 120 is configured by including various memories such as a ROM (Read Only Memory), a RAM (Random Access Memory), and an auxiliary storage device. A program (robot action generation assistance program) to be executed by the processing unit 130 is, for example, stored in the ROM and/or the auxiliary storage device of the storage unit 120. The processing unit 130 is configured by using one or more processors.

The processing unit 130 implements the respective functions of an information presentation section 131, a text data acquisition section 132, a synthetic text data generation section 133, a source code acquisition section 134, the natural language processing section 135, a simulation section 136, and a transmission section 137, by executing the robot action generation assistance program.

The information presentation section 131 displays, on the terminal device 200, the input screen 131a that prompts the user to input details of a resultant (fried chicken boxed meal) to be obtained by actions of the robot 300 on objects (ingredients), and also presents information for robot action generation assistance to the user on the input screen 131a. An example of screen display on the terminal device 200 will be described later.

The text data acquisition section 132 acquires text data that is described by the user in the natural language about the details of the resultant (fried chicken boxed meal). For example, the text data acquisition section 132 acquires, as text data, a character string (text) that is described by the user in the natural language in a text input field on the input screen 131a. In any case, the user can input text in a free style by using the natural language.

However, there are some cases where the text data inputted by the user does not satisfy a condition for outputting source code for the actions of the robot 300. For example, the description of an object is insufficient (lack of the description of the name or a quantity of an ingredient), so that the natural language processing section 135 cannot output source code, in some cases. In such cases, the information presentation section 131 may present, to the user, information that prompts input of new details of the resultant that satisfy the condition for outputting source code. Thus, it can be ensured that source code for actions of the robot 300 is more reliably generated.

The information presentation section 131 and the text data acquisition section 132 may receive, from the user, step-by-step text input by using a question-and-answer format. For example, the information presentation section 131 presents question information to the user, and the text data acquisition section 132 accumulates text inputted as an answer to the question information. By repeating such operations, a sufficient amount of text data can be obtained. In other words, the information presentation section 131 may present question information to the user a plurality of times, the text data acquisition section 132 may accumulate text data inputted as answers to the question information, and the natural language processing section 135 may output source code from the accumulated text data. Thus, it is possible to assist in generating high-quality source code for actions of the robot 300.

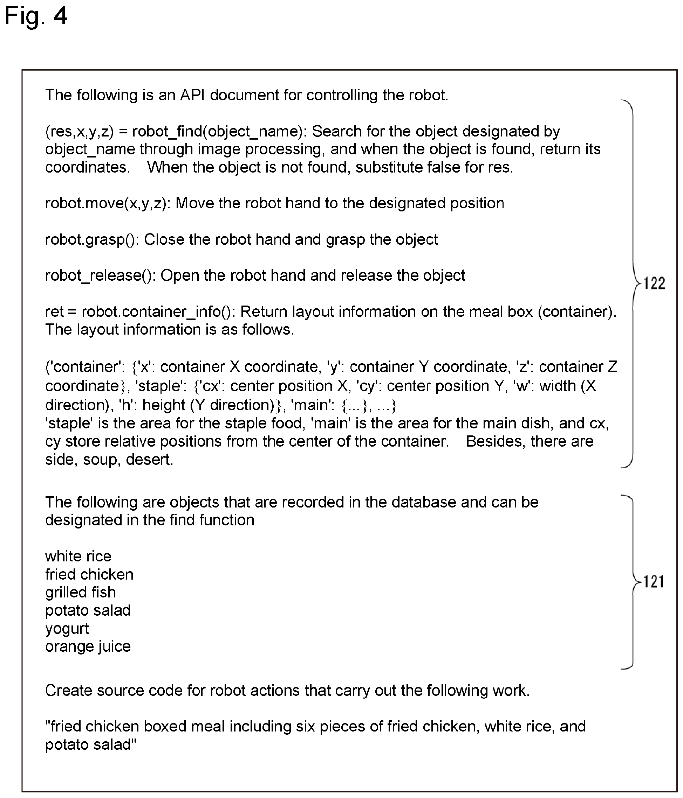

The synthetic text data generation section 133 generates synthetic text data by adding, to the text data acquired by the text data acquisition section 132, at least the API document 122 for controlling the robot 300 and the information in the object (ingredient) database 121. Note that an example of the content of the synthetic text data will be described later. The API document 122 and the information in the object (ingredient) database 121 are text data. The synthetic text data generation section 133 may transmit the generated synthetic text data to the information presentation section 131, to have the synthetic text data displayed on the terminal device 200 of the user. Since the names of the objects (ingredients) recorded in the object (ingredient) database 121 and the names of the learned ingredients stored in the robot 300 are similar as described above, an object (ingredient) of which the image can be recognized by the trained model stored in the robot 300 can be told to the natural language processing section 135 by adding the API document 122 and the information in the object (ingredient) database 121 to the text data. In other words, as shown in Figure 4, it is possible to tell the natural language processing section 135 about an object (ingredient) that can be retrieved by a find function that is the API document 122. As described above, an object (ingredient) of which the image can be recognized by the robot 300, in the resultant described in the natural language, can be told to the natural language processing section 135. When an object (ingredient) of which the image cannot be recognized by the robot 300 is included in the resultant, for example, the information presentation section 131 may be caused to display a screen prompting re-input of details of the resultant, with a list of objects (ingredients) of which the images can be recognized, a screen displaying that the trained model stored in the robot 300 requires additional learning, or the like.

The source code acquisition section 134 inputs the synthetic text data generated by the synthetic text data generation section 133 into the natural language processing section 135, and acquires output of source code for actions of the robot 300 from the natural language processing section 135. In the present embodiment, the source code acquisition section 134 acquires the source code for the actions of the robot 300 by providing the synthetic text data generated by the synthetic text data generation section 133 to the natural language processing section 135 via the API, and acquiring the source code for the actions of the robot 300 from the natural language processing section 135 via the API. Note that in the present embodiment, the natural language processing section 135 is incorporated in the processing unit 130. However, for example, when the natural language processing section 135 and the robot action generation assistance server 100 are different servers, the synthetic text data generated by the synthetic text data generation section 133 may be provided to a natural language processing server via the API, and the source code for the actions of the robot 300 may be acquired from the natural language processing server via the API.

The natural language processing section 135 executes a natural language processing task by using the LLM. The LLM is a language model that learned large-scale text data in large amounts beforehand and that can execute various language processing tasks simply by being given only a few exemplary tasks. In the present embodiment, the natural language processing section 135 outputs source code for actions of the robot 300 corresponding to synthetic text data.

The simulation section 136 conducts a test to see whether the robot 300 acts based on the details of the resultant (fried chicken boxed meal including six pieces of fried chicken, white rice, and potato salad) described by the user, by using the source code acquired by the source code acquisition section 134, in a virtual environment. In the present embodiment, open source ROS (Robot Operating System) for middleware of the robot 300, open source Gazebo for a physical simulator, or the like is used to cause the robot 300 to act in the virtual environment by using the source code acquired by the source code acquisition section 134. When the resultant described by the user can be obtained in the simulation, the simulation section 136 determines that the simulation ends normally, and, when the resultant described by the user cannot be obtained, determines that the simulation ends abnormally.

When the simulation ends normally, the simulation section 136 transmits the source code for the actions of the robot 300 to the robot 300 via the transmission section 137. The simulation section 136 may transmit the source code used when the simulation ends normally to the information presentation section 131, to have the source code displayed on the terminal device 200 of the user.

A case where the simulation ends abnormally is, for example, a case where an error message, a warning, or the like occurs during the simulation. The simulation section 136 can monitor, in real time via the ROS, log information relating to the state of the robot 300, the progress of the task, and the like during the simulation. The simulation section 136 can detect and acquire abnormality information including an error message, a warning, or the like from the log information. The robot action generation assistance server 100 corrects the source code by using the abnormality information.

The simulation section 136 generates feedback data for correcting, based on the abnormality information, the source code. The source code acquisition section 134 re-inputs the feedback data generated by the simulation section 136 into the natural language processing section 135, and acquires output of corrected source code from the natural language processing section 135.

Thus, the robot action generation assistance server 100 corrects the source code.

Note that the content of the feedback data is, for example, "ERROR: "Fried chicken" cannot be released. An obstacle is in the target position." or the like. In the present embodiment, the simulation section 136 acquires the abnormality information including an error message, a warning, or the like from the log information via the ROS. However, embodiments are not limited thereto, and various data, such as the state of the robot 300 during the simulation and abnormality information, may be acquired via the Gazebo API.

The simulation section 136 may transmit the abnormality information acquired when the simulation ends abnormally to the information presentation section 131, to have the abnormality information displayed on the terminal device 200 of the user. The simulation section 136 may transmit the acquired abnormality information to the information presentation section 131 to have the abnormality information displayed on the terminal device 200 of the user, and may receive text input from the user. For example, the abnormality information may be presented to the user, then text input about details of a correction, such as a function or a code that requires correction, may be received from the user, and then feedback data may be generated based on the details received from the user. At the time, the user can include, in the source code, exception handling that causes an error message to be displayed in response to some event, for example, the occurrence of an error (for example, stating, in the Try block, a code that can cause the event). By doing so, a specific correction instruction can be provided to the natural language processing section 135, and time required to correct the source code can be reduced.

The simulation section 136 simulates the actions of the robot 300 again by using the corrected source code acquired by the source code acquisition section 134 in the virtual environment. When the re-simulation ends abnormally, the above-described means for correcting the source code is performed. In other words, the robot action generation assistance server 100 repeats the correction of the source code and the simulation of the corrected source code until the simulation ends normally.

As described above, even if the source code has a problem, the correction of the source code can be automatically performed based on the abnormality information in the simulation. Thus, it can be ensured that accurate source code is created.

Note that the robot action generation assistance server 100 may confirm that the source code does not include codes relating to access to a file system and the network 10 before the simulation section 136 performs simulation by using the source code. When the source code includes codes relating to access to a file system and the network 10, the robot action generation assistance server 100 deletes such unnecessary codes and thereby prevents access to the file system and the network 10. In other words, the robot action generation assistance server 100 may conduct a security check before simulation is performed.

The transmission section 137 transmits the source code used when the simulation ends normally to the robot 300.

The robot 300 acquires the source code transmitted from the transmission section 137. By using the source code, the robot 300 performs the actions of picking, moving, and releasing each object (ingredient), according to the details of the resultant (boxed meal including six pieces of fried chicken, white rice, and potato salad).

### <Screen display on terminal device 200>

Next, an example of screen display on the terminal device 200 is described.

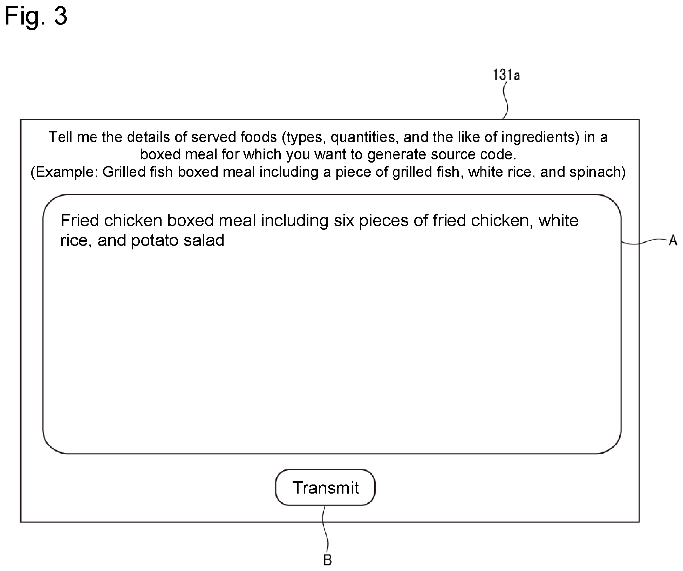

Figure 3 shows an example of display of the input screen 131a on the terminal device 200 according to the present embodiment.

The information presentation section 131 displays the input screen 131a on the terminal device 200, as shown in Figure 3. The information presentation section 131 displays as the input screen 131a, for example, a text input field A for text input and also information that prompts text input into the text input field A. The information presentation section 131 may display sample information showing an example of text to be inputted into the text input field A.

When the details of the resultant (fried chicken boxed meal) described in the natural language is inputted into the text input field A by the user, the information presentation section 131 displays a button B for an operation of executing source code acquisition. When the button B is operated, the text data acquisition section 132 acquires the text data. In the example shown, the details of the resultant are "Fried chicken boxed meal including six pieces of fried chicken, white rice, and potato salad", and the user inputs the details of the resultant in Japanese.

### <Content of synthetic text data>

Next, an example of the content of synthetic text data is described.

Figure 4 shows an example of synthetic text data according to the present embodiment.

The synthetic text data generation section 133 generates synthetic text data as shown in Figure 4 by adding, to the details of the resultant acquired by the text data acquisition section 132, the API document 122 for controlling the robot 300 and the information in the object (ingredient) database 121.

### <Example of operation sequence>

Next, an operation flow in the robot action generation assistance system 1 is described.

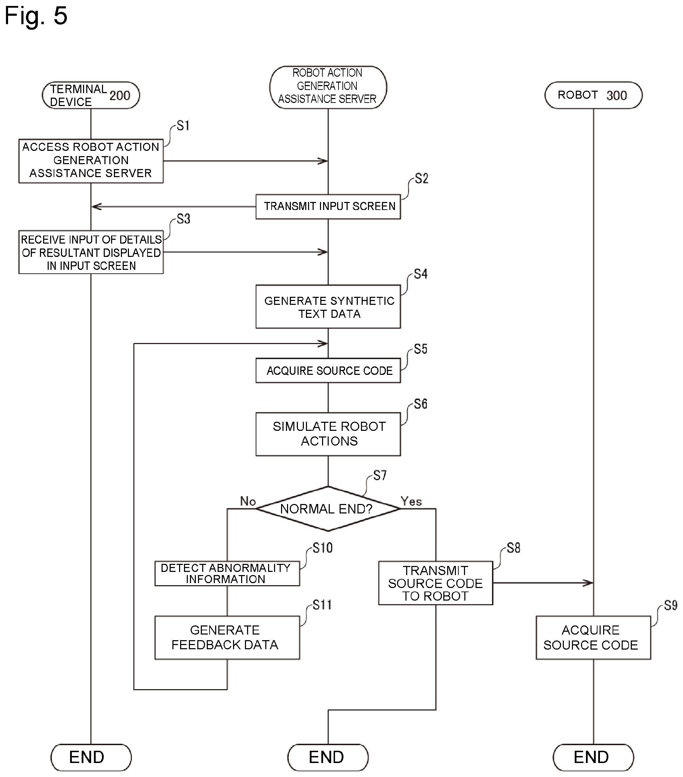

Figure 5 is a diagram showing an example of an operation sequence of the robot action generation assistance system 1 according to the present embodiment.

In step S1, the user accesses the robot action generation assistance server 100 from the terminal device 200.

In step S2, the robot action generation assistance server 100 transmits the input screen 131a to the terminal device 200 and displays the input screen 131a thereon.

In step S3, the terminal device 200 receives text input into the text input field in the input screen 131a. The user inputs "Fried chicken boxed meal including six pieces of fried chicken, white rice, and potato salad" into the text input field, as shown in Figure 3. The terminal device 200 transmits the inputted text data to the robot action generation assistance server 100.

In step S4, the robot action generation assistance server 100 generates synthetic text data by adding the API document 122 and the information in the object (ingredient) database 121 to the text data received from the terminal device 200. The content of the synthetic text data is as shown in Figure 4.

In step S5, the robot action generation assistance server 100 inputs the synthetic text data into the natural language processing section 135 and acquires source code outputted from the natural language processing section 135.

In step S6, the robot action generation assistance server 100 tests actions of the robot 300 by using the acquired source code on the simulation section 136.

In step S7, the robot action generation assistance server 100 moves to step S8 when the simulation ends normally, and moves to step S10 when the simulation ends abnormally.

In step S8, the robot action generation assistance server 100 transmits the source code used in the simulation to the robot 300.

In step S9, the robot 300 acquires the source code transmitted from the robot action generation assistance server 100, and performs the actions of picking, moving, and releasing the objects (ingredients) by using the acquired source code.

In step S10, the robot action generation assistance server 100 detects and acquires abnormality information from log information on the simulation.

In step S11, the robot action generation assistance server 100 generates feedback data, based on the abnormality information. The content of the feedback data is, for example, "ERROR: "Fried chicken" cannot be released. An obstacle is in the target position." Next, moving to step S5, the robot action generation assistance server 100 inputs the generated feedback data into the natural language processing section 135, and acquires output of corrected source code from the natural language processing section 135.

### <Modification examples>

Although the source code is corrected based on the abnormality information in the above-described embodiment, the source code is corrected also according to a result of execution by an interpreter unit 140 in a modification example. Note that the same components as in the above-described embodiment are denoted by the same reference signs, and a description thereof is omitted.

In the modification example, the robot action generation assistance server 100 further includes the interpreter unit 140 for executing source code. The interpreter unit 140 executes source code, for example, by using the Python interpreter. Before simulation by the simulation section 136, the interpreter unit 140 executes the source code acquired by the source code acquisition section 134. When the execution by the interpreter unit 140 ends normally, the simulation by the simulation section 136 is subsequently performed.

When the execution by the interpreter unit 140 ends abnormally, feedback data is generated based on an error message obtained from the execution by the interpreter unit 140. The source code acquisition section 134 re-inputs the feedback data generated by the interpreter unit 400 into the natural language processing section 135, and acquires output of corrected source code from the natural language processing section 135. Such operations are repeated until the execution by the interpreter unit 140 ends normally. In other words, in the modification example, in addition to source code correction based on abnormality information, source code correction based on an error message at the interpreter unit 140 is also performed.

Thus, it can be ensured that more accurate source code for actions of the robot 300 is generated. Note that the source code correction based on the error message at the interpreter unit 140 may be performed any of before and after simulation. Moreover, the transmission section 137 may transmit the source code to the robot 300 when the simulation by the simulation section 136 ends normally and also when a result of the execution by the interpreter unit 140 ends normally.

Note that in the above-described embodiment, part of the processing performed by the robot action generation assistance server 100 may be changed so as to be performed by the terminal device 200 or another device. In such a case, a robot action generation assistance device or the robot action generation assistance system 1 may be configured by using the robot action generation assistance server 100 and the terminal device 200.

The operation flow and the operation examples in the present embodiment described above do not necessarily need to be performed in chronological order according to the order described in the flowchart or the sequence chart. For example, steps in the operation may be performed in different order from the sequence described as the flowchart or the sequence chart, or may be performed in parallel. Some of the steps in the operation may be omitted, and a further step may be added to the processing. The operation flow and the operation examples in the embodiment may be performed separately and independently of each other, and two or more operation flows and operation examples may be performed in combination. For example, some of the steps in one operation flow may be added to another operation flow, and some of the steps in one operation flow may be replaced with some of the steps in another operation flow.

In addition, the robot action generation assistance program that causes a computer to execute the operation according to the present embodiment may be provided. The robot action generation assistance program may be recorded on a computer-readable medium. When the computer-readable medium is used, the robot action generation assistance program can be installed into a computer. Here, the computer-readable medium on which the robot action generation assistance program is recorded may be a non-transitory recording medium. The non-transitory recording medium is not limited particularly, and may be, for example, a recording medium such as a CD-ROM or a DVD-ROM.

### Reference Signs List

- 1: robot action generation assistance system
- 10: network
- 100: robot action generation assistance server
- 110: communication unit
- 120: storage unit
- 121: object database
- 122: API document
- 130: processing unit
- 131: information presentation section
- 131a: input screen
- 132: text data acquisition section
- 133: synthetic text data generation section
- 134: source code acquisition section
- 135: natural language processing section
- 136: simulation section
- 137: transmission section
- 140: interpreter unit
- 200: terminal device
- 300: robot
- 301: robot hand

## Claims

1. A robot action generation assistance device for a robot that performs an action on an object, comprising:
storage means for storing an API document for controlling the robot and information in an object database;
text data acquisition means for acquiring text data that is described by a user in a natural language about details of a resultant to be obtained by the action of the robot on the object;
synthetic text data generation means for generating synthetic text data by adding the API document for controlling the robot and the information in the object database to the text data acquired by the text data acquisition means;
source code acquisition means for inputting the synthetic text data generated by the synthetic text data means into a natural language processor, and acquiring, from the natural language processor, output of source code for the action of the robot to obtain the resultant;
simulation means for performing simulation in which the robot is caused to act in a virtual environment by using the source code acquired by the source code acquisition means;
transmission means for transmitting the source code to the robot when the resultant is obtained in the simulation; and
source code correction means for, when the resultant is not obtained in the simulation, correcting the source code by re-inputting information needed to correct the source code into the natural language processor, based on abnormality information including an error message detected during the simulation.

2. The robot action generation assistance device according to claim 1, wherein the source code correction means obtains output of corrected source code from the natural language processor, as a result of the simulation means generating feedback data based on the abnormality information, and the source code acquisition means inputting the feedback data into the natural language processor.

3. The robot action generation assistance device according to claim 2, wherein the simulation means performs new simulation by using the source code obtained by the source code correction means.

4. The robot action generation assistance device according to claim 1, further comprising interpreter means for executing the source code acquired by the source code acquisition means, wherein
the interpreter means, before the simulation by the simulation means, executes the source code acquired by the source code acquisition means, and
when the execution ends normally, the simulation means performs the simulation by using the executed source code.

5. The robot action generation assistance device according to any one of claims 1 to 4, wherein
the robot has a robot hand,
the object is an ingredient,
the API document includes information relating to picking with the robot hand, moving of the robot hand, releasing from the robot hand, and layout information on a movement-destination place, and
the resultant is food including a plurality of types of the ingredients.

6. A robot action generation assistance system for a robot that performs an action on an object, comprising:
storage means for storing an API document for controlling the robot and information in an object database;
text data acquisition means for acquiring text data that is described by a user in a natural language about details of a resultant to be obtained by the action of the robot on the object;
synthetic text data generation means for generating synthetic text data by adding the API document for controlling the robot and the information in the object database to the text data acquired by the text data acquisition means;
source code acquisition means for inputting the synthetic text data generated by the synthetic text data means into a natural language processor, and acquiring, from the natural language processor, output of source code for the action of the robot to obtain the resultant;
simulation means for performing simulation in which the robot is caused to act in a virtual environment by using the source code acquired by the source code acquisition means;
transmission means for transmitting the source code to the robot when the resultant is obtained in the simulation; and
source code correction means for, when the resultant is not obtained in the simulation, correcting the source code by re-inputting information needed to correct the source code into the natural language processor, based on abnormality information including an error message detected during the simulation.

7. A robot action generation assistance program for a robot that performs an action on an object, comprising:
storage means for storing an API document for controlling the robot and information in an object database;
text data acquisition means for acquiring text data that is described by a user in a natural language about details of a resultant to be obtained by the action of the robot on the object;
synthetic text data generation means for generating synthetic text data by adding the API document for controlling the robot and the information in the object database to the text data acquired by the text data acquisition means;
source code acquisition means for inputting the synthetic text data generated by the synthetic text data means into a natural language processor, and acquiring, from the natural language processor, output of source code for the action of the robot to obtain the resultant;
simulation means for performing simulation in which the robot is caused to act in a virtual environment by using the source code acquired by the source code acquisition means;
transmission means for transmitting the source code to the robot when the resultant is obtained in the simulation; and
source code correction means for, when the resultant is not obtained in the simulation, correcting the source code by re-inputting information needed to correct the source code into the natural language processor, based on abnormality information including an error message detected during the simulation.
